# EUROPEAN PATENT APPLICATION

(11) **EP 3 287 940 A1**
(43) Date of publication of application: **28.02.2018**
(21) Application number: 16185308.0
(22) Date of filing: 23.08.2016
(51) Int. Cl.: G06K 9/00, B60W 30/00

(54) **INTERSECTION DETECTION SYSTEM FOR A VEHICLE**

(71) Applicant: Continental Automotive GmbH, 30165 Hannover (DE)
(72) Inventor: Paul Nadar, Rajesh, 560102 Bangalore (IN)
(74) Representative: Reuter, Andreas

(57) **Abstract**

An intersection detection system (10) for a vehicle (100) is proposed, which comprises a camera (14), a data storage device (16), and a controller (18), wherein the system (10) is configured for capturing at least one image of a surrounding area of the vehicle (100) and for storing the captured image in the data storage device (16). Further, the controller (18) is configured for determining a road section (104) in the stored image, and for determining a first boundary (22) and a second boundary (24) of the road (105) in the determined road section (104). Moreover, the controller (18) is configured for determining a first curvature angle (26) and a second curvature angle (28), and for detecting an intersection (101) of the road (105) based on a comparison of at least one of the first curvature angle (26) and the second curvature angle (28) with a threshold angle.

## Description

### Field of the invention

The invention generally relates to assistance systems for vehicles. Particularly, the invention relates to an intersection detection system for a vehicle, a vehicle with such system and a method for detecting an intersection.

### Background of the invention

In order to make a driver of a vehicle aware that he is approaching an intersection of a road, on which he is driving, usually road humps and/or solar road studs are installed near the intersection.

The road humps are usually installed to reduce a speed of the vehicle and/or to cause the driver to reduce the speed of the vehicle. In contrast to road humps, solar road studs themselves cannot reduce and/or control the speed of the vehicle.

However, passing over a road hump at high speed may lead to potential damage of the vehicle and/or to potential injury of passengers of the vehicle. Moreover, road humps may be difficult to detect and/or identify for the driver if no markings are present and/or during times of limited visibility, such as during night time.

### Description of the invention

It is an object of the present invention to provide a comprehensive, reliable and retrofittable intersection detection system for a vehicle, which allows to increase a safety of the vehicle and of passengers traveling therein.

This object is achieved by the subject matter of the independent claims. Further exemplary embodiments are evident from the dependent claims and the following description.

A first aspect of the invention relates to an intersection detection system for a vehicle. The system comprises a camera, a data storage device and a controller. The system is configured for capturing, by means of the camera, at least one image of a surrounding area of the vehicle. Further, the system is configured for storing the captured image in the data storage device, wherein the controller is configured for determining and/or identifying a road section in the stored image, which road section is located ahead of the vehicle with respect to a moving direction of the vehicle. Further, the controller is configured for determining a first boundary and a second boundary of the road in the determined road section, and the controller is configured for determining a first curvature angle of the first boundary and a second curvature angle of the second boundary. Moreover, the controller is configured for detecting an intersection of the road based on a comparison of at least one of the first curvature angle and the second curvature angle with a threshold angle and/or a threshold value.

The intersection detection system may generally be configured for being employed in a vehicle, wherein the vehicle may be a motor vehicle like a car, a bus or a truck, or a bicycle like a bike or a motor bike.

The intersection may refer to a crossing, a cross-way and/or a junction of a road, on which the vehicle is located and/or moving.

The system may comprise at least one camera. The camera may e.g. be a front view camera capturing images of surroundings in front of and/or in moving direction of the vehicle. The camera of the system may be configured to capture images in the optical wavelength range and/or in the infrared range. The system may also comprise a camera arrangement with a plurality of cameras.

The controller may comprise a processing unit, a processor, a control module or a control unit configured for processing data, particularly image data. Accordingly, the controller may be configured for image processing and/or image data processing.

The data storage device may be any type of data storage configured for storing data.

Rephrasing the first aspect, the intersection detection system is configured for capturing and/or acquiring at least one image of a surrounding area, the surroundings and/or an environment of the vehicle, wherein the surrounding area may be located ahead of the vehicle with respect to a moving direction of the vehicle. The system may also acquire and/or capture an image sequence with a plurality of images in order to increase a reliability of the system. The captured image and/or image data related to the image are then stored in the data storage device. The image and/or the corresponding image data are then processed by the controller in order to detect the intersection. For this purpose, the road section located ahead of the vehicle in moving direction of the vehicle is identified and/or determined. Therein, the road section may refer to image data and/or an image section, in which the road and/or a part thereof is captured. In the determined road section, the first boundary and the second boundary are determined, wherein the first and second boundary may refer to edges and/or borders of the road in the road section, respectively. For instance, the first boundary may refer to a left-hand boundary and the second boundary may refer to a right-hand boundary of the road or vice versa. Accordingly, the first boundary may, at least in a part of the road, be arranged opposite to the second boundary and vice versa. Generally, the first boundary and the second boundary may each be indicative for a course of the road. Further, the controller determines, estimates and/or derives the first curvature angle of the first boundary and the second curvature angle of the second boundary. Each of the first and the second curvature angles may refer to an angle enclosed between two boundary segments of the respective boundary, i.e. the first and second boundary, respectively. More specifically, the first and the second curvature angles may each refer to an angle between a boundary segment and a further boundary segment of the respective first and second boundary. The boundary segment may be located closer to the vehicle than the further boundary segment. If the vehicle approaches an intersection, the courses of the first boundary and the second boundary may change and/or differ from another, which results in different curvature angles, i.e. the first curvature angle may differ from the second curvature angle. In contrast, in case the vehicle is approaching a regular turn of the road, the first and the second curvature angles may have similar and/or nearly equal values. This basically may allow to detect the intersection and/or to improve a reliability of the detection. Finally, in order to reliably determine and/or detect the intersection, at least one of the first curvature angle and the second curvature angle is compared to the threshold angle. If at least one of the first curvature angle and the second curvature angle reaches and/or exceeds the threshold angle, the controller detects the intersection. The threshold angle may be predetermined, programmable, and/or definable. Further the threshold angle may be stored in the data storage device.

Accordingly, by means of the intersection detection system, intersections may be reliably and quickly determined without additional cost e.g. for additional sensors. This may generally increase an overall safety of the vehicle. Further, by using an already existing camera of the vehicle, the system may also be retrofit to vehicles in a cost efficient manner.

According to an embodiment, the controller is configured for detecting the intersection of the road based on a comparison of the first curvature angle with the second curvature angle. As outlined previously, in case the vehicle approaches a regular turn of the road, the first curvature angle may be substantially equal to the second curvature angle. In contrast, in case the vehicle approaches an intersection the first curvature angle may significantly differ from the second curvature angle, wherein this difference between the first and the second curvature angles may allow to reliably detect and/or identify the intersection. The first and second curvature angle may differ in this case in value and/or in sign.

According to an embodiment, the threshold angle is between 40° to 60°. Such an angle for the curvature may be indicative for a directional change of the road, which may in turn be indicative for an intersection. Accordingly, the threshold angle in the range of 40° to 60° may allow to reliably detect the intersection.

According to an embodiment, the controller is configured for determining the road section based on a road segmentation. In other words, the controller may be configured for applying a road segmentation technique in order to quickly and reliably determine and/or find the road section in the captured image. Generally, road segmentation may be utilized to discard comparatively large image areas and/or to impose geometrical constraints on objects captured in the image. Several road segmentation techniques and/or approaches have been developed, which may all be advantageously used and/or employed in the intersection detection system.

According to an embodiment, the controller is configured for determining the road section based on a road color. Usually, the road color may significantly differ from a color of other objects captured in the image. Thus, the road color may be advantageously used to quickly and reliably differentiate between the road and other objects, and thus to accurately determine the road section.

According to an embodiment, the controller is configured for determining the road section based on a Gaussian mixture model and/or based on a color classification. In the Gaussian mixture model, a scene captured in the image may be processed e.g. by assigning a Gauss function with respect to color and/or color intensity to each object present in the scene. Thus, the Gaussian mixture model may be advantageously utilized for road segmentation. Further, in the color classification, which may also refer to a so-called color feature based classifier, for instance a road color may be modelled taking into account various scenarios and/or different light conditions, such as e.g. shadows on the road, a wet road, a light condition during afternoon, dusk, dawn and/or night time. Thus, both the Gaussian mixture model as well as the color classification may improve a stability and reliability of the intersection detection system.

According to an embodiment, the intersection detection system further comprises a warning device for outputting and/or generating a warning signal, wherein the controller is configured for triggering the warning signal upon detecting the intersection. The warning signal may be an acoustic, a haptic and/or an optical warning signal. Accordingly, the warning device may comprise a lamp, a speaker and/or a vibration element to output the corresponding warning signal. Generally, warning the driver of the vehicle by means of the warning signal that he is approaching an intersection, may provide the driver the opportunity to reduce a speed of the vehicle. This may in turn reduce a risk of an accident and increase overall safety.

According to an embodiment, the controller is configured for actuating a breaking system of the vehicle and for reducing a speed of the vehicle upon detecting and/or in response to a detected intersection. The controller may be configured for generating and/or outputting a breaking signal when and/or if the intersection is detected, which breaking signal may be supplied to the breaking system, such that the breaking system is actuated by the breaking signal and in turn the speed of the vehicle is reduced. This may further reduce a risk of an accident and increase overall safety of the vehicle.

According to an embodiment, the controller is configured for determining a type of the intersection. Alternatively or additionally the controller is configured for reducing and/or controlling a speed of the vehicle according to a type of the intersection. A type of the intersection may be e.g. a two-way intersection, a three-way intersection, a four-way intersection and/or an n-way intersection. Also, no diversion path may be detected by the controller. Generally, the type of the intersection may be determined by the controller based on at least one of the first curvature angle and the second curvature angle. Reducing and/or controlling the speed of the vehicle according to the type of the intersection may further increase overall safety of the vehicle.

According to yet another embodiment of the invention, the intersection detection system and/or the controller thereof is configured for tracking the first and_/or second road boundary in the captured image and/or in a sequence of captured images. Generally, tracking may be relevant to produce a stable output and/or to reduce false positives by tracking road boundaries in an image, a sequence of images and/or in a frame sequence. Also, tracking may help to distinguish between the case when the vehicle is entering the intersection and the case when the vehicle is crossing the intersection. Thus, the intersection detection system may be configured for applying a tracking method. In this tracking method, e.g. a particle filter based approach may be applied to track the road boundaries. Tracking and/or the tracking method may also be used to estimate and/or trace the road boundaries even if the road segments may be broken e.g. due to a road segmentation failure. Therein, the left and right road boundaries may be tracked independently with respect to each other. Moreover, a texture, a gradient and/or color features may be considered as input parameters for the controller and/or may be taken into account by the controller during tracking. In other words, the intersection detection system and/or the controller may be configured for tracking road boundaries based a texture, a gradient and/or color features of the captured image and/or a sequence of captured images.

A second aspect of the invention relates to a vehicle comprising an intersection detection system as described above and in the following.

It is to be noted that features of the intersection detection system as described above and in the following may be features of the vehicle and vice versa.

A third aspect of the invention relates to a method for detecting an intersection of a road. The method comprises the following steps:
- capturing, by means of a camera, at least one image of a surrounding area of the vehicle;
- storing the image in a data storage device;
- determining, by means of a controller, a road section in the stored image;
- determining, by means of the controller, a first boundary and a second boundary of the road in the determined road section;
- determining, by means of the controller, a first curvature angle of the first boundary and a second curvature angle of the second boundary; and
- detecting an intersection of the road based on a comparison of at least one of the first curvature angle and the second curvature angle with a threshold angle.

It is to be noted that features of the intersection detection system and the vehicle as described above and in the following may be features of the method and vice versa.

These and other aspects of the invention will be apparent from and elucidated with reference to the embodiments described hereinafter.

### Brief description of the drawings

Fig. 1 shows schematically a vehicle with an intersection detection system according to an exemplary embodiment.
Fig. 2 shows schematically the intersection detection system of the vehicle of Fig. 1.
Fig. 3 shows a top view of the vehicle of Fig. 1 at an intersection.
Fig. 4 shows a flow chart illustrating steps of a method for detecting an intersection according to an exemplary embodiment.

In principle, identical parts are provided with the same reference symbols in the figures. The figures are not to scale.

### Detailed description of exemplary embodiments

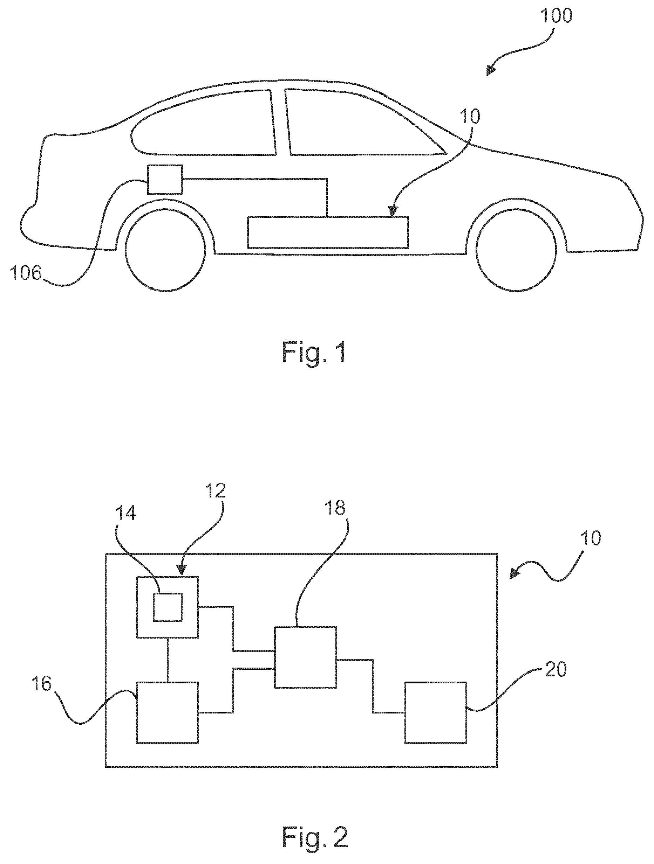

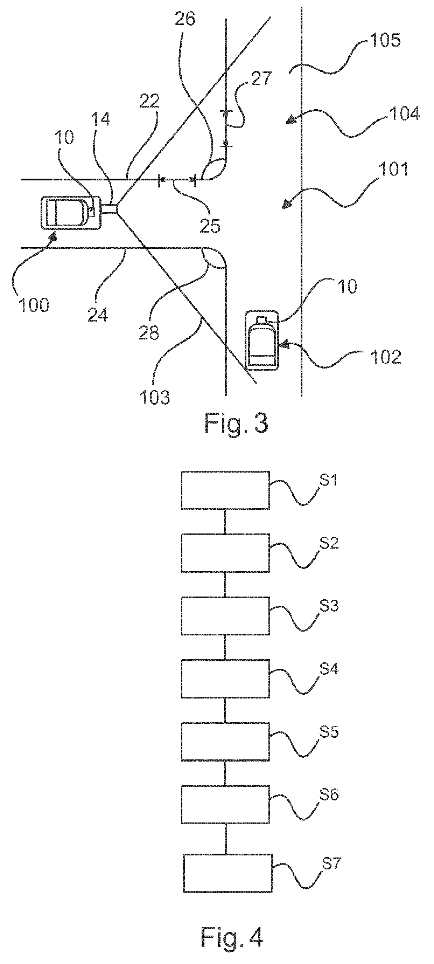

Fig. 1 shows schematically a vehicle 100 with an intersection detection system 10 according to an exemplary embodiment. Fig. 2 shows schematically the intersection detection system 10 of the vehicle 100 of Fig. 1. Fig. 3 shows a top view of the vehicle 100 at an intersection 101 illustrating a function of the intersection detection system 10.

The intersection detection system 10 comprises a camera arrangement 12 with at least one camera 14, a data storage device 16 and a controller 18. The camera arrangement 12 and/or the camera 14 may e.g. be arranged on a windshield of the vehicle 100.

The camera 14 may be an optical and/or an infrared camera. Particularly, the camera 14 may be a front camera of the vehicle 100. The camera arrangement 12 may also comprise a plurality of cameras 14 arranged on vehicle 100. This way, the camera arrangement 12 may provide surround view.

The intersection detection system 10 is configured to capture and/or acquire, by means of the camera arrangement 12 and/or by means of the camera 14, at least one image of an environment, surroundings and/or a surrounding area of the vehicle 100. The intersection detection system 10 may also be configured for capturing an image sequence comprising a plurality of consecutive images. Particularly, the system 10 may be configured to capture an image of the surrounding area located ahead of the vehicle 100 with respect to a moving direction of the vehicle 100. The surrounding area may be comprised in a field of view 103 of the camera 14, as shown in Fig. 3. The system 10 is further configured to store the image and/or image data corresponding to the captured image in the data storage device 16.

The controller 18 is configured to access and/or process the stored image and/or the corresponding image data. In order to detect the intersection 101, which the vehicle 100 is approaching, the controller 18 is configured to determine and/or identify a road section 104 of the road 105. Particularly, the road section 104 may be located ahead of the vehicle 100 with respect to a moving direction. The road section 104 may be determined using and/or applying road segmentation. The road segmentation may further be improved by taking the road color into account, applying a Gaussian mixture model and/or by applying a color feature based classifier, i.e. by applying a color classification.

Further, the controller 18 is configured for determining a first boundary 22 and a second boundary 24 of the road 105. The boundaries 22, 24 may refer to sides, edges and/or borders of the road 105.

Moreover, the controller 18 is configured for determining a first curvature angle 26 of the first boundary 22 and a second curvature angle 28 of the second boundary 24. By way of example, in order to determine the first curvature angle 26, the controller 18 may for instance determine a boundary segment 25 and a further boundary segment 27, which boundary segments 25, 27 are both part of the first boundary 22. Therein, the further boundary segment 27 is located further away from the vehicle 100 than the boundary segment 25. To determine the first curvature angle 26 a direction of the boundary segment 25 and a direction of the further boundary segment may be determined and the first curvature angle may be determined as the angle enclosed between vectors representing the boundary segments 25, 27. The same approach may be applied to determine the second curvature angle 28.

To finally detect the intersection 101, the controller 18 is configured to compare the determined first curvature angle 26 and/or the determined second curvature angle 28 with a threshold angle, which may be in the range of 45 to 60°. In case at least one of the first curvature angle 26 and the second curvature angle 28 exceeds the threshold angle, the controller 18 may detect that the vehicle 100 is approaching the intersection 101.

Further, if the vehicle 100 is approaching a regular turn of the road 105 instead of the intersection 101, the first curvature angle 26 and the second curvature angle 28 may have a similar value. Thus, in order to improve a reliability, accuracy and/or precision of the intersection detection system 10, the controller 18 may be configured to compare the first curvature angle 26 with the second curvature angle 28. A comparatively big difference between the first and the second curvature angles 26, 28 may enable the system 10 to differentiate between intersections and regular turns of the road 105.

If and/or when the system has detected that the vehicle 100 is approaching the intersection 101, i.e. if/when the intersection 101 is detected, the controller 18 may also actuate a breaking system 106 of the vehicle 100 to reduce a speed of the vehicle 100.

Moreover, optionally the intersection detection system 10 comprises a warning device 20 for outputting a warning signal, wherein the controller 18 may be configured for triggering the warning signal upon detecting the intersection 101. The warning signal may e.g. be an acoustic, an optical and/or a haptic signal.

Further, to improve reliability of the intersection detection process, the controller 18 may take navigation data from a navigation device into account.

Apart from that the controller 18 may be configured for determining a type of the intersection, such as e.g. a two-way intersection, a three-way intersection, a four-way intersection, and/or an n-way intersection. Also, no diversion path may be determined by the controller 18. The type of the intersection may be determined based on the first and second curvature angles 26, 28, a comparison between both of them and/or e.g. a classification of curvature angles indicating a specific type of intersection, which classification may be stored in the data storage device 16. Further, the controller 18 may be configured for reducing the speed of the vehicle 100 according to the determined type of the intersection 101.

Summarizing aspects of the invention, the intersection detection system 10 may be regarded as a camera based solution to find the entrance of a two-way, a three-way, a four-way and/or an n- way road and to control the speed of the vehicle 100. Road segmentation may be applied to find the road section 104 on the image. On the segmented road section 104, a road curvature is estimated by determining the first and second boundaries 22, 24 and determining the first and second curvature angles 26, 28. If the road curvature and/or at least one of the first and the second curvature angles 26, 28 exceeds the threshold angle, then the controller 18 may detect the intersection 101 and reduce the speed of the vehicle 100. Further, a learning based approach may be adopted to model the road 105 using a Gaussian mixture model and/or also color feature based classifier may be applied to find and/or validate the road section. Thus, curvature detection may be applied on the detected road edges, i.e. the first and second boundary 22, 24. Based on the first and second curvature angles 26, 28 the type of the intersection 101 may be determined, i.e. the system 10 may identify a two-way, a three-way, a four-way, an n-way intersection and/or no diversion path, and the vehicle speed may be controlled accordingly.

For the sake of completeness, it is to be noted that the above-described intersection detection system 10 may also advantageously be applied in vehicle 102 shown in Fig. 3, wherein the controller 18 of the system 10 of vehicle 102 may detect that there is a diversion path at the intersection 101 and may reduce the speed of the vehicle 102 accordingly.

Fig. 4 shows a flow chart illustrating steps of a method for detecting an intersection according to an exemplary embodiment.

In a first step S1 at least one image of a surrounding area of the vehicle 100 is captured by means of a camera 14 and/or by means of a camera arrangement 12. In a step S2 the image is stored in a data storage device 16, and in a step S3, by means of a controller 18, a road section 104 in the stored image is determined. In a further step S4 a first boundary 22 and a second boundary 24 of the road 105 in the determined road section 104 is determined by means of the controller 18. Further, in a step S5 a first curvature angle 26 of the first boundary 22 and a second curvature angle 28 of the second boundary 24 is determined by means of the controller 18. Finally, in step S6 an intersection 101 of the road 105 is detected based on a comparison of at least one of the first curvature angle 26 and the second curvature angle 28 with a threshold angle.

In a next step S7 the first road boundary 22 and/or the second road boundary 24 may be tracked in the captured image, in a sequence of captured images and/or in a frame sequence. By tracking at least one of the road boundaries 22, 24, the controller 18 may distinguish between the case when the vehicle 100 is entering the intersection 101 and the case when the vehicle 100 is crossing the intersection 101. Thus, the intersection detection system 10 may be configured for applying a tracking method. In this tracking method, e.g. a particle filter based approach may be applied to track at least one of the road boundaries 22, 24. Tracking and/or the tracking method in step S7 may also be used to estimate and/or trace the road boundaries 22, 24 even if the road segments may be broken e.g. due to a road segmentation failure. Therein, the first and/or second road boundaries 22, 24 may be tracked independently with respect to each other. Moreover, a texture, a gradient and/or color features may be considered as input parameters for the controller 18 and/or may be taken into account by the controller 18 during the tracking in step S7.

While the invention has been illustrated and described in detail in the drawings and foregoing description, such illustration and description are to be considered illustrative or exemplary and not restrictive; the invention is not limited to the disclosed embodiments. Other variations to the disclosed embodiments can be understood and effected by those skilled in the art and practicing the claimed invention, from a study of the drawings, the disclosure, and the appended claims. In the claims, the word "comprising" does not exclude other elements or steps, and the indefinite article "a" or "an" does not exclude a plurality. The mere fact that certain measures are recited in mutually different dependent claims does not indicate that a combination of these measures cannot be used to advantage. Any reference signs in the claims should not be construed as limiting the scope.

## Claims

1. An intersection detection system (10) for a vehicle (100), the system (10) comprising:
a camera (14);
a data storage device (16); and
a controller (18);
wherein the system (10) is configured for capturing, by means of the camera (14), at least one image of a surrounding area of the vehicle (100);
wherein the system (10) is configured for storing the captured image in the data storage device (16);
wherein the controller (18) is configured for determining a road section (104) in the stored image;
wherein the controller (18) is configured for determining a first boundary (22) and a second boundary (24) of the road (105) in the determined road section (104);
wherein the controller (18) is configured for determining a first curvature angle (26) of the first boundary (22) and a second curvature angle (28) of the second boundary (24); and
wherein the controller (18) is configured for detecting an intersection (101) of the road (105) based on a comparison of at least one of the first curvature angle (26) and the second curvature angle (28) with a threshold angle.

2. The intersection detection system (10) according to claim 1,
wherein the controller (18) is configured for detecting the intersection (101) of the road (105) based on a comparison of the first curvature angle (26) with the second curvature angle (28) ; and/or
wherein the threshold angle is between 40° to 60°.

3. The intersection detection system (10) according to claim 1 or 2,
wherein the controller (18) is configured for determining the road section (104) based on a road segmentation.

4. The intersection detection system (10) according to one of the preceding claims,
wherein the controller (18) is configured for determining the road section (104) based on a road color.

5. The intersection detection system (10) according to one of the preceding claims,
wherein the controller (18) is configured for determining the road section (104) based on a Gaussian mixture model and/or based on a color classification.

6. The intersection detection system (10) according to one of the preceding claims, further comprising:
a warning device (20) for outputting a warning signal;
wherein the controller (18) is configured for triggering the warning signal upon detecting the intersection (101).

7. The intersection detection system (10) according to one of the preceding claims;
wherein the controller (18) is configured for actuating a breaking system (106) of the vehicle (100) and/or for reducing a speed of the vehicle (100) upon detecting the intersection (101).

8. The intersection detection system (10) according to one of the preceding claims,
wherein the controller (18) is configured for determining a type of the intersection (101); and/or
wherein the controller (18) is configured for reducing a speed of the vehicle (100) according to a type of the intersection (101).

9. A vehicle (100) comprising an intersection detection system (10) according to one of the preceding claims.

10. A method for detecting an intersection (101) of a road (105), the method comprising:
capturing, by means of a camera (14), at least one image of a surrounding area of the vehicle (100);
storing the image in a data storage device (16);
determining, by means of a controller (18), a road section (104) in the stored image;
determining, by means of the controller (18), a first boundary (22) and a second boundary (24) of the road (105) in the determined road section (104);
determining, by means of the controller (18), a first curvature angle (26) of the first boundary (22) and a second curvature angle (28) of the second boundary (24); and
detecting an intersection (101) of the road (105) based on a comparison of at least one of the first curvature angle (26) and the second curvature angle (28) with a threshold angle.
